# EUROPEAN PATENT APPLICATION

(11) **EP 4 231 370 A1**
(43) Date of publication of application: **23.08.2023**
(21) Application number: 22156993.2
(22) Date of filing: 16.02.2022
(51) Int. Cl.: H01M 4/04, H01M 4/13, H01M 4/139, H01M 4/36, H01M 4/62, H01M 10/052, H01M 10/0525, H01M 4/131, H01M 4/133, H01M 4/134, H01M 4/136, H01M 4/1391, H01M 4/1393, H01M 4/1395, H01M 4/1397, H01M 4/38, H01M 4/40, H01M 4/48, H01M 4/485, H01M 4/58, H01M 4/587, H01M 4/525

(54) **METHOD OF MANUFACTURING OF AN ELECTRODE FOR A LITHIUM-ION BATTERY WITH INCREASED POROSITY**

(71) Applicant: VOLKSWAGEN AG, 38440 Wolfsburg (DE)
(72) Inventor: Jamadar, Kartik, 38442 Wolfsburg (DE)
(74) Representative: Gulde & Partner

(57) **Abstract**

The invention relates to a method for manufacturing an electrode for a lithium-ion battery comprising the steps of applying a first composition forming first layers 112, 122 of a first coating 110, 120 on the sides of a substrate 100, and applying a second composition forming a second layer 114, 124 on the first layer 112 of the first coating 110. The second composition comprises an electroactive material and additionally a salt additive in order provide an improved pore structure at the surface of the electrode, upon contacting the coated substrate with an organic solvent. The invention further relates to an electrode obtained by the method and a battery comprising said electrode.

## Description

The invention relates to a method of manufacturing of an electrode for a lithium-ion battery with increased porosity, an electrode obtained by the method and a battery assembly comprising the electrode.

Lithium-ion batteries are nowadays widely used. For instance, in consumer electronics, they are used in portable devices including mobile phones and smartphones, laptops and tablets, and so on.

Furthermore, lithium-ion batteries are an important part of electric vehicles since electric batteries are used in electric cars and hybrid vehicles. A lithium-ion battery is a type of rechargeable battery in which lithium ions move from the negative electrode through an electrolyte to the positive electrode during discharge and back when charging. lithium-ion batteries use an intercalated lithium compound as the material at the positive electrode and typically graphite at the negative electrode.

As described above, the negative electrode of a lithium-ion battery is usually made of graphite as active material. In order to achieve a higher capacity in lithium-ion batteries, electrode coils are commonly subjected to a calendaring process. The active material is compressed by around 40% by this calendaring process. Calendaring is similar to a rolling process, wherein material is compressed in a small deformation zone using a high calendaring force.

Preferably, a density of, 1,3 to 2.0 g/cm³, especially about 1,6 g/cm³, can be achieved by application of the calendaring process for the anode electrode and a density of around 3 to 4.0 g/cm³, especially about 3.6 g/cm³ for the NMC cathode electrode. Thereby it is possible to increase the volumetric energy density of the cell, which in turn increases the conductivity of the cell. As one increases the density by calendaring, the porosity decreases at the same time. The porosity decreases rapidly especially on the surface causing it difficult for Lithium-ions to intercalate between the graphite layers. This in turn causes lithium plating on the surface, which decreases the life of the cell drastically. As calendaring deformation takes place in very small zones, depending on the diameter of the roller, there is a very high stress concentration in a relatively small deformation area. This stress concentration causes cracks in the active material. Summarizing, due to the high calendaring force applied, the porosity of the electrode material decreases. In particular, the porosity decreases in an inhomogeneous way, i.e. more on the surface where electrode is in contact with rolls. Hence, high compression in calendaring is desirable but it is attached with problem like lithium plating. This may happen also to positive as well as negative electrode materials.

This problem can be addressed in various ways: For instance by adding graphite materials with higher porosity, such as "Porocarb" in higher proportions. However this approach is expensive and it increases the inactive component in the battery, thereby reducing the energy density.

Furthermore, attempts have been made to decrease the compression in the calendaring step to less than 20%. However, the reduced volumetric energy density of cell also decreases cell conductivity and also decreases the cell volumetric energy density.

Hence, there is a need for providing improved lithium-ion batteries having a high volumetric energy density and at the same time maintaining a suitable cell life-time.

This issue is addressed by the invention by providing a method of manufacturing of an electrode for a lithium-ion battery with increased porosity, which at the same time has a high density.

According to one aspect, the invention relates to a method for manufacturing an electrode for a lithium-ion battery comprising the steps:
providing a substrate;
applying first composition forming a first layer of a first coating on one side of the substrate, wherein the first composition comprises an electroactive material;
applying a second composition forming a second layer on the first layer of the first coating, wherein the second composition comprises an electroactive material and a salt additive; and
contacting the coated substrate with an organic solvent, wherein the salt additive is a salt which is dissolvable by said organic solvent to form the final electrode.

Due to the high calendaring force applied, the porosity of the electrode material decreases. In particular, the porosity decreases in an inhomogeneous way, i.e. more on the surface where electrode is in contact with rolls. By using the multi-layer approach according to the invention, the porosity is homogenously distributed across the thickness as explained in the following in detail:
The change of pore structure for specific pore size ranges and the deformation of active material are identified to be crucial factors, negatively influencing electrochemical performance. In particular, the surface roughness and surface open pores, which have an influence on the overall wetting behavior of the electrodes with electrolyte, change with compression ratio. In calendaring process porosity reduction but active material particle deformation at the surface can be observed at compression rate of 20 %. This means that the porosity is not uniformly distributed, as the porosity on the surface is more strongly reduced on the surface than towards copper foil.

In particular, it was found in the context of the present invention that the most severe problems arise from the above-explained porosity inhomogeneities which is also called "porosity gradient". The invention achieves the improvement of the battery properties by providing a homogenous porosity distribution. This homogenous porosity distribution is obtained by using the "multi-layer" approach of the invention. Especially, since the second composition comprises an electroactive material and additionally a salt additive, an improved pore structure at the surface of the electrode, upon contacting the coated substrate with an organic solvent is achieved. By dissolving the salt additive from the coated substrate, the porosity of the coated substrate will change. The solvent will dissolve the salt additive from the second layer to a greater extent than from the first layer, thereby compensating for inhomogeneities of the pores.

For high compression rates, e.g. of 20 % - 25 %, particular big pores between 5 µm and 2 µm have been closed by compression. It is assumed that these are mainly the observed missing surface open pores. The influence of lacking these "big" pores and the overall smaller total pore volume on the electrochemical behavior is one of the main cause of Lithium plating, which decrease life of the cell drastically. Furthermore, particle deformation by high calendering compression blocking the surface area leads to a transportation barrier for lithium-ions, which in turn drastically influences the long term performance of these electrodes for relative high C-rates.

Consequently, the "multi-layer" approach according to the invention successfully addresses the problem of particle deformation of surface particles. This has a major impact on the electrochemical performance.

In this context another problem is "binder migration". Normally, in anode CMS an SBR binder is used. For a cathode, PVDF is used as a binder. During electrode drying process after coating, it has been observed that the binder migrates to the surface and hence block the pores on the surface. This in turn will render electrolyte wetting and also lithium intercalation difficult. The electrical resistance will increase due to the higher concentration of binder on the surface as caused by the aforementioned binder migration.

According to a preferred embodiment, the first composition is different from the second composition.

According to a preferred embodiment of the method of the invention, the organic solvent is at least one selected from organic solvents comprising cyclic carbonate, such as propylene carbonate (PC) and ethylene carbonate (EC) mixed with linear carbonates such as diethylene carbonate (DEC), ethylene methylene carbonate (EMC) and dimethylene carbonate (DMC). EC and DEC are more preferred.

The aforementioned solvents proved particularly suitable for the process according to the present invention.

According to a preferred embodiment of the method of the invention, the organic solvent is essentially free of lithium salts, especially essentially free of salts. Especially, the salt additive will serve as electrolyte once dissolved from the pores of the electrodes.

According to a preferred embodiment of the method of the invention, the salt additive is selected from the group consisting of: lithium hexafluorophosphate (LiPF₆), lithium hexafluoroarsenate (LiAsF₆), lithium fluorosulfonylimide (LiN(FSO₂)₂) (LiFSI), lithium bis(trifluoromethanesulfonimide) (LiN(CF₃SO₂)₂), lithium triflate (UCF₃SO₃), lithium perchlorate (LiClO₄), lithium tetrafluoroborate (LiBF₄), lithium nitrate (LiNO₃), lithium iodide (Lil), lithium bromide (LiBr), lithium bis(trifluoromethanesulfonimide) (LiTFSI) (LiN(CF₃SO₂)₂), and combinations thereof.

Lithium bis(trifluoromethanesulfonimide) (LiTFSI) is especially preferred as salt additive, as it is insensitive to humidity and elevated temperatures.

According to a preferred embodiment, the coating method is a wet coating method, wherein the first composition and the second composition are provided as slurries.

According to another embodiment, the coating method is a dry coating method, wherein the first composition and the second composition are provided as dry particles.

According to a preferred embodiment, the first layer of the first coating is substantially free of the salt additive particles, in particular substantially free of lithium bis(trifluoromethanesulfonimide) (LiTFSI).

According to a preferred embodiment the first layer of the second coating is substantially free of the salt additive, in particular substantially free of lithium bis(trifluoromethanesulfonimide) (LiTFSI).

According to an even more preferred embodiment, the first layer of the first coating and the first layer of the second coating are substantially free of the salt additive particles, in particular substantially free of lithium bis(trifluoromethanesulfonimide) (LiTFSI).

According to a preferred embodiment of the method of the invention, the first composition forming the first layer is essentially free of a salt additive which is dissolvable by said organic solvent.

The second composition comprises in addition to the electroactive material, a salt additive.

Then the coated substrate is contacted with an organic solvent. The salt additive is dissolved by said organic solvent, providing an electrode material with suitable pore sizes and, in particular, a homogenous pore size distribution. Due to the gradient of the salt additive in the double layer, inhomogeneities of the pore structure as induced by the calendaring process are compensated resulting in homogenous pore structure providing a long cell life and high energy density.

According to a preferred embodiment of the method of the invention, the first composition forming the first layer comprises a binder material.

The binder material is preferably one or more selected from poly(tetrafluoroethylene) (PTFE), sodium carboxymethyl cellulose (CMC), styrene-butadiene rubber (SBR), poly(vinylidene fluoride) (PVDF), nitrile butadiene rubber (NBR), styrene ethylene butylene styrene copolymer (SEBS), styrene butadiene styrene copolymer (SBS), lithium polyacrylate (LiPAA), sodium polyacrylate (NaPAA), sodium alginate, lithium alginate, ethylene propylene diene monomer (EPDM), and combinations thereof.

According to a preferred embodiment of the method of the invention, the amount of the binder in the first composition forming the first layer is higher than the amount of a binder in the second composition forming the second layer.

According to a preferred embodiment of the method of the invention, the second composition forming the second layer is substantially free of binder material.

According to these embodiments, the first composition forming the first layers comprises a binder material. The amount of the binder in the first composition forming the first layers is higher than the amount of a binder in the second composition forming the second layers. The binder in the first layers ensures adherence of the coating to the substrate. On the other hand, the reduced amount of binder in the second layers, which form the surface of the electrode, has the advantageous effect of protecting the pore structure during calendaring. Furthermore, after the coating with the second layers, due to the concentration difference of the binder, i.e. the concentration gradient over the double layered coating, binder migrates from the first layers into the second layers. This migration further compensates for the inhomogeneities of the pore structure as induced by the calendaring process.

In the context of the present invention, the expression "substantially free of X" means not more than 5 wt.-% of the respective compound X in the respective composition, preferably, not more than 3, 2, 1, 0.5, 0.1, or 0.01 wt.-%.

According to a preferred embodiment, the method for manufacturing an electrode further comprises the steps of:
applying a further first composition forming a first layer of a second coating on the other side of the substrate, wherein the further first composition comprises an electroactive material;
applying a further second composition forming a second layer on the first layer of the second coating, wherein the further second composition comprises an electroactive material and a salt additive.

According to a preferred embodiment, the further first composition is different from the further second composition.

According to a preferred embodiment, the salt additive in the further second composition is lithium bis(trifluoromethanesulfonimide) (LiTFSI).

According to a preferred embodiment, the further first composition forming the first layer of the second coating is essentially free of a salt additive which is dissolvable by said organic solvent.

According to a preferred embodiment, the further first composition forming the first layer of the second coating comprises a binder material.

According to a preferred embodiment, the amount of the binder in the first composition forming the first layer is higher than the amount of a binder in the second composition forming the second layer.

According to a preferred embodiment, the second composition forming the second layer is substantially free of binder material.

In the context of the present invention, the expression "substantially free of X" means not more than 5 wt.-% of the respective compound X in the respective composition, preferably, not more than 3, 2, 1, 0.5, 0.1, or 0.01 wt.-%.

According to a further aspect, the invention relates to an electrode obtained by the method as described above.

According to a further aspect, the invention relates to a lithium-ion battery comprising an electrode as described above, wherein the electrode is a positive electrode of the battery or a negative electrode of the battery.

In the charged lithium-ion accumulator, the electrical potential difference of the electrodes is used in an electrochemical process with material change of the electrodes to generate electricity. In the accumulator, lithium ions can freely migrate through the electrolyte between the two electrodes, from which the accumulator derives its name. In contrast to the lithium ions, the transition metal and graphite structures of the electrodes are stationary and protected from direct contact by a separator. The mobility of the lithium ions is necessary to balance the external current flow during charging and discharging so that the electrodes themselves remain (largely) electrically neutral.

The negative electrode is a graphite intercalation compound of general composition LixCn where lithium is present as the cation.

Solid carbon comes in different forms known as allotropes depending on the type of chemical bond. The two most common are diamond and graphite. In graphite the bonds are sp² orbital hybrids and the atoms form in planes with each bound to three nearest neighbors 120 degrees apart. In each layer, the carbon atoms are arranged in a honeycomb lattice. The bond length is 0.142 nm, and the distance between planes is 0.335 nm. Atoms in the plane are bonded covalently, with only three of the four potential bonding sites satisfied. The fourth electron is free to migrate in the plane, making graphite electrically conductive. Bonding between layers is via weak van der Waals bonds, which allow layers of graphite to be easily separated, or to slide past each other. Electrical conductivity perpendicular to the layers is consequently about 1000 times lower. The graphite layer structure allows for the intercalation of lithium cations and therefore its use as electrode material of lithium-ion batteries.

When discharging, the intercalation compound emits electrons that flow to the positive electrode via the external circuit. At the same time, the same number of Li⁺ ions migrate from the intercalation compound through the electrolyte to the positive electrode. At the positive electrode, it is not the lithium ions that absorb the electrons from the external circuit, but rather the structures of the transition metal compounds that are present there. Depending on the type of accumulator, it can be cobalt, nickel, manganese or iron ions that change their charge. In the discharged state of the accumulator, the lithium is still present in the form of ions in the positive electrode.

Since the affinity of lithium ions for the positive electrode material is greater than their affinity for the negative (graphite) electrode, energy is released as lithium ions flow from the negative to the positive electrode.

Within both electrodes, electrons can move freely as electron gas and migrate to the external conductors or enter the electrode from the conductors, but cannot migrate between the electrodes within the battery. The partition is impermeable to electrons, which prevents a short circuit.

When the electrode is used as the negative electrode of the battery, the negative electrode may comprise one or more negative electroactive materials such as graphite, graphene, and/or carbon nanotubes (CNTs). The electrolyte is preferably a lithium salt in an organic solvent.

Therefore, the negative electrode preferably comprises graphite as active material, preferably as a main component.

When the electrode is used as the negative electrode of the battery, the negative electrode may comprise one or more lithium-accepting negative electroactive materials, such as lithium titanium oxide (Li₄Ti₅O₁₂), one or more transition metals (such as tin (Sn)), one or more metal oxides (such as vanadium oxide (V₂O₅), tin oxide (SnO), titanium dioxide (TiO₂)), titanium niobium oxide (TiₓNb_{y}O_{z}, where 0 ≤x ≤ 2, 0 ≤ y ≤ 24, and 0 ≤ z ≤ 64), and one or more metal sulfides (such as ferrous or iron sulfide (FeS)). In various aspects, as further detailed below, the negative electroactive material may be pre-lithiated.

When the electrode is used as the negative electrode of the battery, the negative electrode may comprise a lithium metal and/or lithium alloy. In other variations, the negative electrode may include a negative electroactive material that is silicon based comprising silicon, for example, a silicon alloy, silicon oxide, or combinations thereof that may be further mixed, in certain instances, with graphite.

When the electrode is used as the positive electrode of the battery, the positive electrode may comprise a lithium-based positive electroactive material that is capable of undergoing lithium intercalation and deintercalation, alloying and dealloying, or plating and stripping, while functioning as a positive terminal of the capacitor battery .

According to a preferred embodiment, the negative electrode the lithium-ion cell is made from carbon and the positive electrode is preferably a metal oxide.

According to an embodiment the substrate is a metal substrate, preferably a copper substrate.

Further embodiments can be derived from the dependent claims and their combination.

Unless stated otherwise in the individual case, the various embodiments of the invention mentioned in this application can advantageously be combined with one another.

The invention is explained below in exemplary embodiments with reference to the associated drawings showing:
- Figure 1: a lithium-ion battery assembly with electrodes as obtained by the method according to the invention;
- Figure 2: an electrode according to an embodiment of the state of the art;
- Figure 3: an electrode according to an embodiment of the invention; and
- Figure 4: a method of manufacturing of an electrode according to an embodiment of the invention.

As follows, the Figures are described in detail:

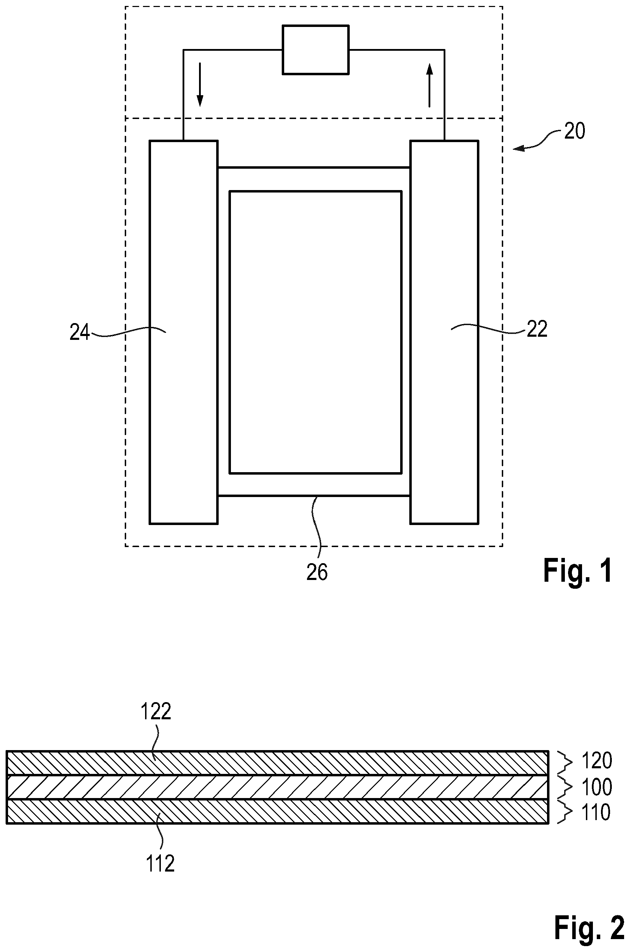

Figure 1 shows a lithium-ion battery 20 with electrodes as obtained by the method according to the invention. The positive electrode 24, the negative electrode 22, and the separator 26 may each include an electrolyte solution or system, for example inside their pores, capable of conducting lithium ions between the negative electrode 22 and the positive electrode 24. An appropriate electrolyte, whether in solid, liquid, or gel form, capable of conducting lithium ions between the electrodes 22, 24, may be used in the battery assembly 20. In the present case, the electrolyte is a non-aqueous liquid electrolyte solution that includes a lithium salt dissolved in an organic solvent or a mixture of organic solvents. Numerous non-aqueous liquid electrolyte solutions may be employed in the battery assembly 20.

Figure 2 shows an electrode according to the prior art. The electrode is obtained by providing a substrate 100, preferably made from copper. The next step is applying first compositions forming first layers 112, 122 of a first coating 110 and a second coating 120, respectively, on both sides of the substrate 100. The first compositions comprise an electroactive material.

There are no further second layers on the first layers of the first coating 110 and the second coating 120. The first composition forming the first layers 112, 122 may comprise a binder material. The amount of the binder is the same as in the layers. The binder in the first layers 112, 122 ensures adherence of the coating to the substrate. Upon calendaring the electrode porosity deteriorates, wherein inhomogeneities are detected within the electrode material.

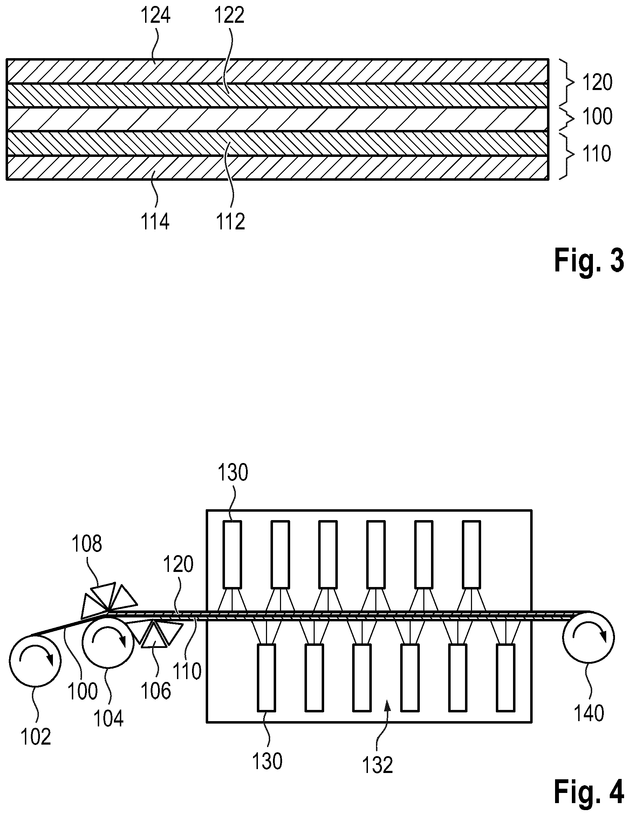

Figure 3 shows an electrode according to an embodiment of the invention. The electrode is obtained by providing a substrate 100, which preferably is made from copper as an anode material. The next step is applying first compositions forming first layers 112, 122 of a first coating 110 and a second coating 120, respectively, on both sides of the substrate 100. The first compositions comprise an electroactive material. Then, in a further step second compositions forming second layers 114, 124 on the first layers 112, 122 of the first coating 110 and the second coating 120 are applied.

The first composition forming the first layers 112, 122 comprises a binder material. The amount of the binder in the first composition forming the first layers 112. 122 is higher than the amount of a binder in the second composition forming the second layers 114, 124.

The binder in the first layers 112, 122 ensures adherence of the coating to the substrate. On the other hand, the reduced amount of binder in the second layers 114, 124, which form the surface of the electrode, has the advantageous effect of protecting the pore structure during calendaring. Furthermore, after the coating with the second layers 114, 124, due to the concentration difference of the binder, i.e. the concentration gradient over the double-layered coating, binder migrates from the first layers 112, 122 into the second layers 114, 124. This migration further compensates for the inhomogeneities of the pore structure as induced by the calendaring process.

The second composition comprises in addition to the electroactive material, a salt additive. Then the coated substrate is contacted with an organic solvent. The salt additive is dissolved by said organic solvent, providing an electrode material with suitable pore sizes and, in particular, a homogenous pore size distribution. As the lithium salt dissolves in the organic solvent, the "electrolyte" is formed. In the final electrolyte, i.e. the organic solvent comprising the dissolved lithium salt. During the electrolyte injection method, only organic solvent is added. As the lithium salt dissolves inside this organic solvent, the final electrolyte will be formed inside the closed cell. Due to the gradient of the salt additive in the double layer, inhomogeneities of the pore structure as induced by the calendaring process are compensated resulting in homogenous pore structure providing a long cell life and high volumetric energy density.

It follows from the above, that the gradient of the binder and the gradient of the salt additive of the double layer structures, i.e. layers 112, 114 and layers 122, 124, are oriented in opposite directions but act together to increase the homogeneity of the pore structure of the electrode material.

Figure 4 shows a method of manufacturing of the electrode according to an embodiment of the invention in detail. A first multi slot die 106 applies a first coating comprising a first layer of active material. Subsequently, a second layer of active material and LiTFSi is applied. This can either be done without backup roll 104 or can be done after drying of the coating. In that same way, a second multi slot die 108 applies a second coating comprising a first layer of active material. Subsequently a second layer of active material and LiTFSi is applied. Drying nozzles 130 are supplying hot air from top and/or bottom. Furthermore, drying is achieved in drying chambers 132. Rewinding means 140 are used for rewinding of the coated electrode which is transferred to calendaring.

### Reference signs

- 20: Battery assembly
- 24: Positive electrode
- 22: Negative electrode
- 26: Separator

- 100: Substrate102 Coil with substrate
- 104: Backup Roll
- 106: First multi slot
- 108: Second multi slot

- 110: First coating
- 112: First Layer
- 114: Second layer
- 120: Second coating
- 122: First Layer
- 124: Second layer

- 130: Drying nozzle
- 132: Drying chamber
- 140: Rewinding means

## Claims

1. A method for manufacturing an electrode for a lithium-ion battery comprising the steps:
providing a substrate (100);
applying a first composition forming a first layer (112) of a first coating (110) on one side of the substrate (100), wherein the first composition comprises an electroactive material;
applying a second composition forming a second layer (114) on the first layer (112) of the first coating (110), wherein the second composition comprises an electroactive material and a salt additive;
contacting the coated substrate (100) with an organic solvent, wherein the salt additive is a salt which is dissolvable by said organic solvent.

2. The method for manufacturing an electrode according to any one of the preceding claim 1, wherein
the first composition is different from the second composition.

3. The method for manufacturing an electrode according to any one of the preceding claims, wherein
the organic solvent comprises at least one selected from cyclic carbonates and linear carbonates, preferably comprising both, cyclic carbonates and linear carbonates, especially selected from EC and PC as cyclic carbonates and preferably selected from DEC, DMC and EMC as linear carbonates.

4. The method for manufacturing an electrode according to any one of the preceding claims wherein
the organic solvent is essentially free of lithium salts.

5. The method for manufacturing an electrode according to any one of the preceding claims, wherein
the salt additive is a lithium salt, preferably lithium bis(trifluoromethanesulfonimide) (LiTFSI).

6. The method for manufacturing an electrode according to any one of the preceding claims, wherein
the first composition forming the first layer (112) is essentially free of a salt additive which is dissolvable by said organic solvent.

7. The method for manufacturing an electrode according to any one of the preceding claims, wherein
the first composition forming the first layer (112) comprises a binder material.

8. The method for manufacturing an electrode according to any one of the preceding claims, wherein
the amount of the binder in the first composition forming the first layer (112) is higher than the amount of a binder in the second composition forming the second layer (114).

9. The method for manufacturing an electrode according to any one of the preceding claims, wherein
the second composition forming the second layer (114) is substantially free of binder material.

10. The method for manufacturing an electrode according to any one of the preceding claims, comprising the further steps of:
applying a further first composition forming a first layer (122) of a second coating (120) on the other side of the substrate (100), wherein the further first composition comprises an electroactive material;
applying a further second compositions forming a second layer (124) on the first layer (122) of the second coating, wherein the further second composition comprises an electroactive material and a salt additive.

11. The method for manufacturing an electrode according to any one of the preceding claims, wherein
the further first composition is different from the further second composition.

12. An electrode obtained by the method according to any one of the preceding claims.

13. A lithium-ion battery (20) comprising an electrode (22, 24) according to claim 12, wherein the electrode (22, 24) is the negative electrode of the battery.

14. A lithium-ion battery (20) comprising an electrode (22, 24) according to claim 12, wherein the electrode (22, 24) is the positive electrode of the battery.
